# EUROPEAN PATENT APPLICATION

(11) **EP 3 457 380 A1**
(43) Date of publication of application: **20.03.2019**
(21) Application number: 17795551.5
(22) Date of filing: 10.05.2017
(51) Int. Cl.: G08G 1/017, H04N 7/18

(54) **TRAFFIC ACCIDENT PRE-WARNING METHOD AND TRAFFIC ACCIDENT PRE-WARNING DEVICE**

(30) Priority: 10.05.2016 CN 201610308302
(71) Applicant: Tencent Technology (Shenzhen) Company Limited, Shenzhen, Guangdong 518057 (CN)
(72) Inventor: WU, Yifan, Shenzhen Guangdong 518057 (CN)
(74) Representative: Eisenführ Speiser
(86) International application number: PCT/CN2017/083762
(87) International publication number: WO 2017/193933

(57) **Abstract**

A traffic accident pre-warning method and a traffic accident pre-warning device. The method comprises: obtaining the positions of a plurality of vehicles in a section and videos of the section collected in at least one direction at the position of each of the vehicles (101); parsing the collected videos to obtain a traffic scene at the position of each of the vehicles (102); synthesizing the videos of the section collected in at least one direction at the position of each of the vehicles to obtain a panoramic video of the section (103); identifying the vehicles in a target area in the panoramic video, and synthesizing the traffic scenes at the positions of the vehicles in the target area to obtain a traffic scene of the target area (104); performing traffic accident prediction on the target area on the basis of the traffic scene of the target area (105); and sending pre-warning information to at least one vehicle in the target area when it is determined that the traffic scene of the target area will become a traffic accident scene (106).

## Description

### RELATED APPLICATION

This application claims priority to Chinese Patent Application No. 201610308302.4, titled "TRAFFIC ACCIDENT PROCESSING METHOD AND TRAFFIC ACCIDENT PROCESSING DEVICE" filed with the Chinese Patent Office on May 10, 2016, which is incorporated by reference in its entirety.

### FIELD OF THE TECHNOLOGY

This application relates to a traffic monitoring and early warning technology in the communications field, and in particular to a traffic accident early warning method and a traffic accident early warning device.

### BACKGROUND OF THE DISCLOSURE

Vehicles already become indispensable transportation tools. When there are many vehicles and a road condition is complicated, there is a need to take measures to ensure driving safety.

Currently, various forms of terminals are generally installed in the vehicles, such as a navigating device, to prompt information of a currently driving road. For example, the navigating device prompts the vehicles of speed limit information of the currently driving road, traffic condition such as a congestion degree, and prompts whether the current road is a road with frequent accidents, so as to prompt drivers to pay attention to driving safety.

However, environment around the currently driving road of the vehicles and status of the vehicles on the driving road, such as numbers and speeds of the vehicles around, change dynamically and are complicated. In addition, the drivers generally cannot accurately control current driving due to a visual field blind spots of the vehicle, especially in a case that the vehicles are at a cross section with heavy traffic and the road is in bad condition, for example, the road is broken (e.g., potholes, cracks, sags and humps, etc.) or there are obstacles and/or pedestrians.

### SUMMARY

According to embodiments of this application, a traffic accident early warning method and a traffic accident early warning device are provided.

In one aspect, a traffic accident early warning method is provided according to an embodiment of this application, which includes: obtaining locations of multiple vehicles in a traveling section and videos captured for the traveling section at each of the vehicle locations from at least one viewing angle;parsing the captured videos to obtain a traffic scene at each of the vehicle locations;synthesizing the videos captured for the traveling section at the vehicle locations from the at least one viewing angle, to obtain a panoramic video for the traveling section; identifying vehicles in a target area in the panoramic video, and synthesizing traffic scenes at vehicle locations of the vehicles in the target area to obtain a traffic scene of the target area; performing traffic accident prediction for the target area based on the traffic scene of the target area; and sending early warning information to at least one of the vehicles in the target area when it is determined that the traffic scene of the target area is about to become a traffic accident scene.

In another aspect, a traffic accident early warning device is provided according to an embodiment of this application, which includes: an obtaining module, a parsing module, a synthesis module, an identification module and a predication module. The obtaining module is configured to obtain locations of multiple vehicles in a traveling section and videos captured for the traveling section at each of the vehicle locations from at least one viewing angle. The parsing module is configured to parse the captured videos to obtain a traffic scene at each of the vehicle locations. The synthesis module is configured to synthesize the videos captured for the traveling section at the vehicle locations from the at least one viewing angle, to obtain a panoramic video for the traveling section. The identification module is configured to identify vehicles in a target area in the panoramic video, and synthesize traffic scenes at vehicle locations of the vehicles in the target area to obtain a traffic scene of the target area. The prediction module is configured to perform traffic accident prediction for the target area based on the traffic scene of the target area. The early warning module is configured to send early warning information to at least one of the vehicles in the target area when it is determined that the traffic scene of the target area is about to become a traffic accident scene.

In a third aspect, a traffic accident early warning device is provided according to an embodiment of this application, which includes a processor and a memory. The processor is configured to execute a program stored in the memory to: obtain locations of multiple vehicles in a traveling section and videos captured for the traveling section at each of the vehicle locations from at least one viewing angle;parse the captured videos to obtain a traffic scene at each of the vehicle locations;synthesize the videos captured for the traveling section at the vehicle locations from the at least one viewing angle, to obtain a panoramic video for the traveling section; identify vehicles in a target area in the panoramic video, and synthesize traffic scenes at vehicle locations of the vehicles in the target area to obtain a traffic scene of the target area; perform traffic accident prediction for the target area based on the traffic scene of the target area; and send early warning information to at least one of the vehicles in the target area when it is determined that the traffic scene of the target area is about to become a traffic accident scene.

In the embodiments of this application, the panoramic video for the traveling section is synthesized by obtaining real-time videos at the locations of the multiple vehicles in the traveling section, and a real-time traffic scene of the target area is determined based on the panoramic video, so as to perform traffic accident prediction for the traffic scene of the target area by using a traffic accident model. In this way, early warning is sent to related vehicles before the traffic accident happens, thereby avoiding the traffic accident. The traffic accident prediction is performed for an actual traffic scene (that is, a driving condition) of the vehicles in the traveling section, and the prediction is targeted and accurate, thereby significantly reducing the risk of the traffic accident.

### BRIEF DESCRIPTION OF THE DRAWINGS

To describe the technical solutions in the embodiments of this application or in the conventional art more clearly, the accompanying drawings required for describing the embodiments or the conventional art are described simply hereinafter. Apparently, the accompanying drawings in the following description show merely the embodiments of this application, and a person of ordinary skill in the art may obtain other drawings from these accompanying drawings without creative efforts.
FIG. 1 is a schematic diagram showing a scene in which a traffic accident early warning device performs traffic accident early warning according to an embodiment of this application;
FIG. 2 is a schematic diagram showing a scene in which a traffic accident early warning device performs traffic accident early warning according to another embodiment of this application;
FIG. 3 is a schematic diagram of a hardware structure of a traffic accident early warning device implemented as a mobile terminal according to an embodiment of this application;
FIG. 4a is a schematic diagram of an in-vehicle mobile terminal according to an embodiment of this application;
FIG. 4b is a schematic diagram of an in-vehicle mobile terminal according to another embodiment of this application;
FIG. 5 is a schematic flowchart of a traffic accident early warning method according to an embodiment of this application;
FIG. 6 is a schematic flowchart of a traffic accident early warning method according to an embodiment of this application;
FIG. 7 is a schematic flowchart of an implementation of step 203 in FIG. 6 according to an embodiment of this application;
FIG. 8 is a schematic flowchart of an implementation of step 204 in FIG. 6 according to an embodiment of this application;
FIG. 9 is a schematic flowchart of an implementation of step 206 in FIG. 6 according to an embodiment of this application;
FIG. 10 is a schematic flowchart of an implementation of step 204 in FIG. 6 according to an embodiment of this application;
FIG. 11 is a schematic flowchart of a traffic accident early warning method according to an embodiment of this application;
FIG. 12 is a schematic flowchart of a traffic accident early warning method according to an embodiment of this application;
FIG. 13 is a schematic structural diagram of a logical function of a traffic accident early warning device according to an embodiment of this application;
FIG. 14 is a schematic diagram of a traffic accident scene according to an embodiment of this application; and
FIG. 15 is a schematic diagram of traffic accident early warning according to an embodiment of this application.

### DESCRIPTION OF EMBODIMENTS

This application is further described in detail with reference to the accompanying drawings and the embodiments hereinafter. It should be understood that the embodiments provided herein are merely used to explain this application but are not intended to limit this application. In addition, the embodiments described below are a part rather than all of embodiments of this application. Embodiments obtained by recombining technical solutions of the following embodiments and other embodiments implemented based on this application by a person skilled in the art without creative efforts shall fall within the protection scope of this application.

It should be noted that the terms "include", "comprise", or any other variation thereof in the embodiments of this application are intended to be inclusive, so that methods or apparatuses including a series of elements not only include specifically recorded elements, but include other elements not specifically listed, or further include elements inherent for the methods or apparatuses. Without more limitations, an element limited by a sentence "include one..." does not exclude that methods or apparatuses including the element include another related element (for example, steps in the methods or units in the apparatuses). For example, a traffic accident early warning method provided in the embodiments of this application includes a series of steps. However, the traffic accident early warning method provided in the embodiments of this application is not limited to the recorded steps. Similarly, a traffic accident early warning apparatus provided in the embodiments of this application includes a series of units. However, the traffic accident early warning apparatus provided in the embodiments of this application is not limited to include the specifically recorded units, but may further include units arranged to obtain related information or process based on the information.

According to embodiments of this application, a traffic accident early warning method is provided, to perform a targeted traffic accident early warning for vehicles. The traffic accident early warning method provided in the embodiments of this application may be applied to a traffic accident early warning device. The traffic accident early warning device may be implemented in various manners. Different implementations of the traffic accident early warning device are described by examples hereinafter.

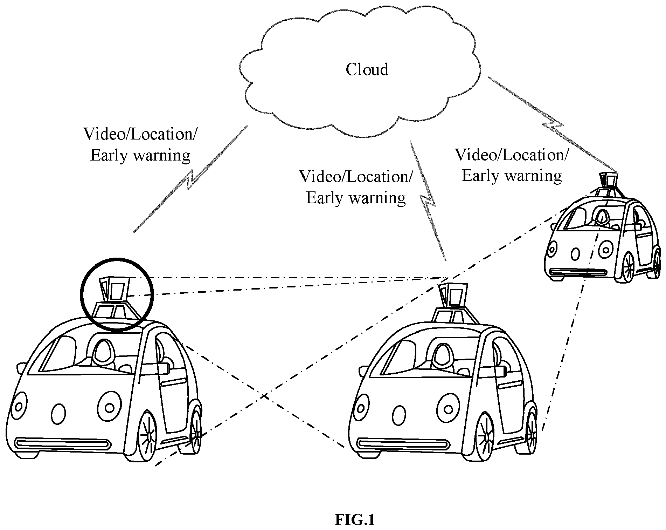

Reference is made to FIG. 1 which is a schematic diagram showing an optional scene in which a traffic accident early warning device performs traffic accident early warning. To save calculation resources and storage resources of a mobile terminal, in the traffic accident early warning device provided in an embodiment of this application, functional units may be distributed at a mobile terminal and a cloud (the cloud is provided with one or more servers according to needs) in a vehicle. Mobile terminals in a traveling section position vehicles where the mobile terminals are located, capture videos at locations of the vehicles, and send the locations of the vehicles and the videos obtained in real time to the cloud, so that the cloud performs traffic accident prediction and early warning for the traveling section based on real-time locations of the vehicles.

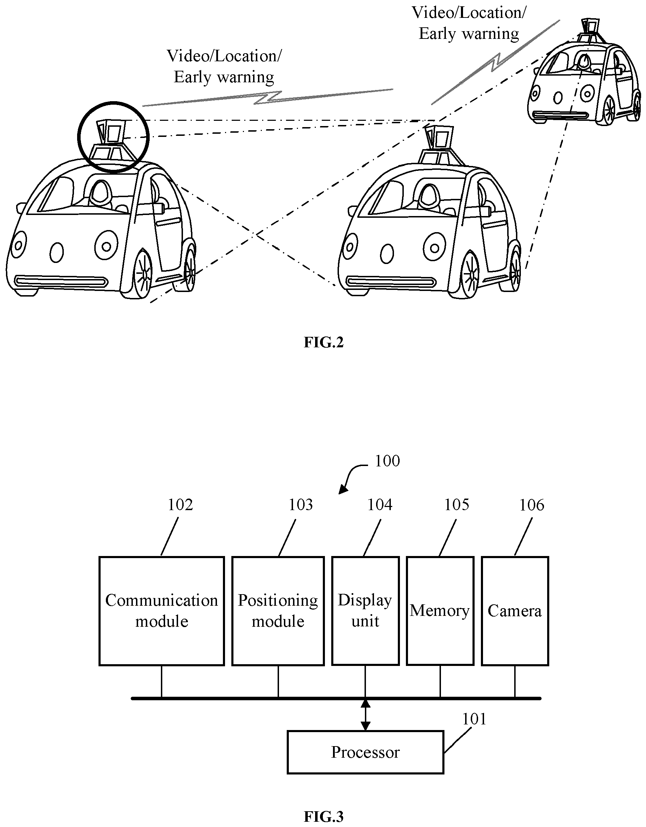

Reference is made to FIG. 2 which is a schematic diagram showing an optional scene in which a traffic accident early warning device performs traffic accident early warning. In a case that calculation resources and storage resources of a mobile terminal are sufficient, all functional units of the traffic accident early warning device may be distributed at a mobile terminal in a vehicle. Mobile terminals in a traveling section send to each other real-time locations of the vehicles provided with the mobile terminals and videos captured at locations of the vehicles. The mobile terminals (all mobile terminals or part of the mobile terminals) perform traffic accident early warning for the traveling section based on the real-time locations of the vehicles in the traveling section and the videos captured at the locations of the vehicles. The mobile terminal may be implemented as a terminal device such as an intelligent phone and a tablet, or implemented as a mobile terminal in other forms, such as a laptop, which is not limited in the embodiments of this application.

FIG. 3 shows a schematic diagram of an optional hardware structure of the foregoing mobile terminal, particularly an in-vehicle mobile terminal. The mobile terminal includes basic hardware modules, such as a processor 101, a communications module 102, a memory 105 and a positioning module 103. Certainly, the mobile terminal may include less or more hardware modules compared with FIG. 3. The mobile terminal is described in the following by examples.

For example, the hardware of the mobile terminal may not include the memory, a display unit, and a camera. The mobile terminal may be connected to external storage devices, such as a flash memory, an optical disc, and a hard disk to store data via a data interface, such as a universal serial bus (USB) interface, a serial advanced technology attachment (SATA) interface, a peripheral component interconnect (PCI) standard interface, and an advanced PCI interface, or store data by using a cloud via the communication module.

Similarly, the mobile terminal may display a processing process or a processing result of information by using the external display unit. Optionally, the display unit is merely configured to support display of the information, or is provided with a touch component to support a touch operation, which is not limited in the embodiment of this application. Similarly, the mobile terminal may capture a video by using the external camera. The mobile terminal and the external camera are connected in a wired or wireless manner to control the camera to capture the video and receive the video captured by the camera.

In another example, the mobile terminal may be provided with a microphone to output a voice, and may be provided with various sensors to assist controlling the mobile terminal according to actual needs.

The hardware structure of the mobile terminal shown in FIG. 3 is described continuously. The processor 101 is configured to execute executable instructions stored in the memory 105 (data is processed by a single manner, and a data processing result is displayed by the display unit, and the traffic accident early warning method provided in the embodiments of this application is implemented in the above manner).

The memory 105 shown in FIG. 3 is configured to store the executable instructions to be executed by the processor 101, an intermediate result and a final result of data processing performed by the processor 101, and data obtained from an external device, so that the processor implements the traffic accident early warning method provided in the embodiment of this application. For example, the memory 105 may store the intermediate processing result of the data by a volatile storage medium such as a random access memory (RAM). The memory may include a non-volatile storage medium, for example, a storage device based on magnetic storage such as a mechanical hard disk and a magnetic tape, a storage device based on a flash memory such as solid state drives (SSD), or any other form of storage devices based on the flash memory.

The communication module 102 shown in FIG. 3 is configured to support communication of the mobile terminal. For example, the communications module 102 may be implemented as a cellular communications module, so as to support the mobile terminal to access to a communication network to perform mobile communication. A communication standard supported by the communication module may include code division multiple access (CDMA), wideband code division multiple access (WCDMA), time division-synchronous code division multiple access (TD-SCDMA), and an evolved standard of the TD-SCDMA, which is not limited in the embodiments of this application. In another example, the communication module may be implemented as a communication module based on various near field communication technologies, such as wireless fidelity (WiFi), Bluetooth, and ZigBee.

The camera shown in FIG. 3 is configured to capture the video. For example, the camera may include one lens, or include multiple lenses to form a lens array so as to increase a visual angle of video capturing. Optionally, the captured videos may have various forms such as a transport stream (TS) and a program stream (PS), so that the communication module transmits the videos over the communication network.

The positioning module shown in FIG. 3 may be implemented as a positioning module based on a global positioning system (GPS). The mobile terminal is positioned by receiving a GPS signal to output location information and speed information of the mobile terminal. Alternatively, the positioning module may be implemented as a module based on other satellite positioning system, such as a positioning module based on a Chinese Beidou satellite positioning system, a positioning module based on a Russian GLONASS global positioning system, and a positioning module based on an European Galileo global positioning system.

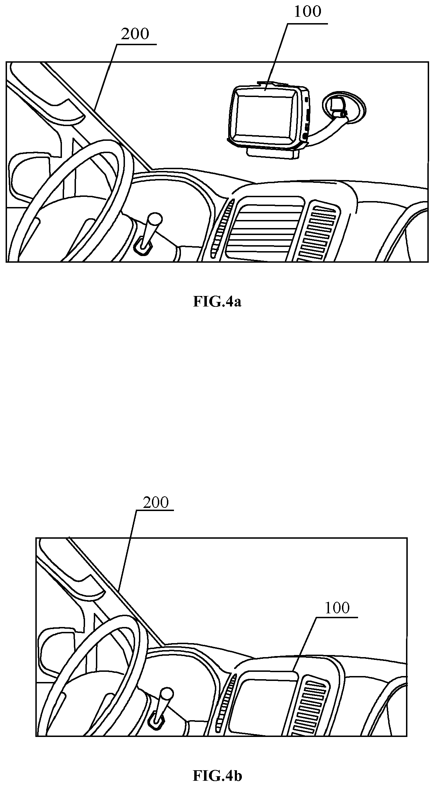

In an embodiment, the traffic accident early warning device is implemented as an in-vehicle mobile terminal fixedly arranged inside the vehicle. For example, reference is made to FIG. 4a which is an optional schematic diagram of an in-vehicle mobile terminal 100 arranged inside a vehicle 200. The in-vehicle mobile terminal may be fixedly arranged in a front panel of the vehicle. Certainly, reference is made to FIG. 4b which is another optional schematic diagram of an in-vehicle mobile terminal 100 arranged inside a vehicle 200. The in-vehicle mobile terminal may be arranged at any location in the vehicle where the mobile terminal can be fixedly arranged. In the embodiments of this application, a form of the in-vehicle mobile terminal and the arranging location of the mobile terminal are not limited.

The in-vehicle mobile terminal is described continuously. The in-vehicle mobile terminal has a basic in-vehicle navigation function. For example, a current location of the vehicle is positioned. A feasible navigation route is determined according to a destination instructed by a driver in conjunction with map data (maintained at the in-vehicle mobile terminal or at a cloud). Navigation is started according to the navigation route selected by the driver or selected automatically. A driving status of the vehicle (for example, a route or a speed) is prompted. The driver is prompted to correct a driving route when the vehicle deviates from a set navigation route. The navigation route is re-determined and further navigation is performed in a case that a predetermined condition is satisfied, for example, when the vehicle deviates for a preset distance from the set navigation route or the driver determines to further drive the vehicle along a current road. Alternatively, the navigation automatically ends when the vehicle deviates from the set navigation route.

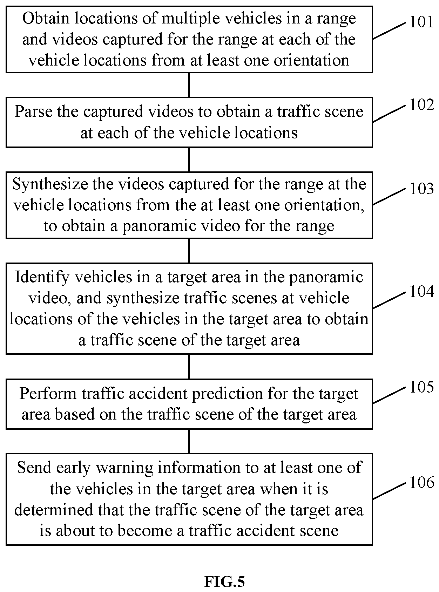

FIG. 5 shows a schematic flowchart of a traffic accident early warning method according to an embodiment of this application. The method includes the following steps 101 to 106.

In step 101, locations of multiple vehicles in a traveling section and videos captured for the traveling section at each of the vehicle locations from at least one viewing angle are obtained.

In step 102, the captured videos are parsed to obtain a traffic scene at each of the vehicle locations.

In step 103, the videos captured for the traveling section at the vehicle locations from the at least one viewing angle are synthesized, to obtain a panoramic video for the traveling section.

In step 104, vehicles in a target area in the panoramic video are identified, and traffic scenes at vehicle locations of the vehicles in the target area are synthesized to obtain a traffic scene of the target area.

In step 105, traffic accident prediction is performed for the target area based on the traffic scene of the target area.

In step 106, early warning information is sent to at least one vehicle in the target area when it is determined that the traffic scene of the target area is about to become a traffic accident scene.

In an implementation, the foregoing traffic accident early warning method is executed by a cloud. The process of obtaining locations of multiple vehicles in a traveling section and videos captured for the traveling section at each of the vehicle locations from at least one viewing angle includes: receiving the vehicle location and the captured videos sent by a mobile terminal arranged on each vehicle.

In another implementation, the foregoing traffic accident early warning method is executed by the mobile terminal on the vehicle. The process of obtaining locations of multiple vehicles in a traveling section and videos captured for the traveling section at each of the vehicle locations from at least one viewing angle includes: positioning the vehicle and capturing videos by the mobile terminal.

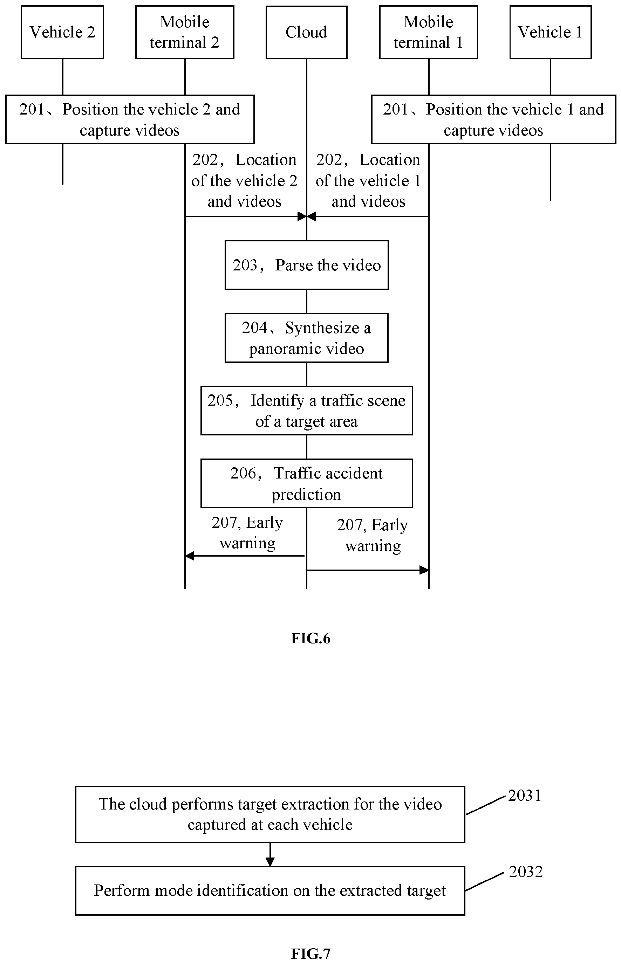

In conjunction with FIG. 6 to FIG. 11, traffic accident processing in a traveling section is described when a traffic accident early warning device is distributed at a cloud and a mobile terminal. Traffic accident early warning in multiple traveling section may be implemented with reference to the technical solutions described below.

The traveling section described in the embodiments of this application refers to a basic area for performing traffic accident early warning. For example, the traveling section may be a road, multiple neighboring roads, a cross road, an urban area, or a city. Alternatively, the traveling section may be a geographic area with a particular geometric shape, for example, a series of square or a rectangle traveling sections obtained by dividing the geographic area for which traffic accident early warning is to be performed. Certainly, the traveling section may be set to be larger or smaller than the traveling section in the above embodiment. The size of the traveling section is set according to the granularity of processing traffic accidents in different geographic traveling sections and a processing ability of the cloud or the mobile terminal, in an actual application.

FIG. 6 is a schematic flowchart of a traffic accident early warning method according to an embodiment of this application. The method includes step 201 to step 207 in the following.

In step 201, each mobile terminal in a traveling section positions a vehicle where the mobile terminal is located, and captures videos at the vehicle location in the traveling section from at least one viewing angle.

In an implementation, the mobile terminal arranged in the vehicle positions the vehicle by using a positioning module. For example, the vehicle location may be indicated by original geographic coordinates outputted from the positioning module, for example, longitude and latitude coordinates, spherical coordinates, or plane two-dimensional coordinates.

In another example, in addition to the original geographic coordinates, for ease of identifying and processing the vehicle locations in the traveling section, the vehicle location may be indicated by square coordinates. The original coordinates of the vehicle locations are converted into the square coordinates in the traveling section, so as to identify the vehicle locations in the traveling section by square coordinates. The square coordinates are obtained by dividing the traveling section based on a geographic square with a predetermined granularity. The area of the geographic square is inversely proportional to the precision of the square coordinate. For example, the smaller the area of the geographic square is, the larger the precision of the vehicle locations indicated by square coordinates obtained by dividing the traveling section is.

Optionally, in a case that the vehicle locations are indicated by the square coordinates, the sizes of the geographic squares obtained by dividing different traveling sections are same. Alternatively, the sizes of the geographic squares obtained by dividing different traveling sections are inversely proportional to vehicle traffic in the traveling section, that is, the larger the vehicle traffic in the traveling section is, the busier traffic in the traveling section is. Therefore, for a traveling section in which vehicle traffic is relatively small, a smaller geographic square is used to divide the traveling section, so as to avoid a problem that the traveling section in which vehicle traffic is relatively small is divided by using a same geographic square, thus resulting in excessive consumption of calculation resources at a cloud.

In an implementation, the mobile terminal captures videos for the traveling section at a location of the mobile terminal from a fixed viewing angle by the camera. The number of the cameras is at least one. Certainly, the number of the cameras may be multiple, so as to form a capturing mode of a wide visual angle. Particularly, the camera may be arranged at top of the vehicle, so as to enlarge the capturing visual angle to the largest degree.

In another implementation, the mobile terminal captures videos by using the camera by changing the viewing angle, so as to form a capturing mode of a full visual angle. Particularly, a dynamic target having a preset distance (for example, ten meters) from the vehicle in the traveling section is usually a potential target resulting in a traffic accident. Accordingly, the dynamic target is determined as a primary capturing object. The dynamic target (for example, a driving vehicle or a pedestrian) having the preset distance from the vehicle in the traveling section is tracked and captured by using the camera. The mobile terminal determines a distance between the vehicle and the dynamic target by using a binocular camera positioning technology, or the mobile terminal detects the distance between the dynamic target and the vehicle by using a depth camera.

In step 202, each mobile terminal in the traveling section sends a location of the vehicle where the mobile terminal is located and the captured videos to a cloud.

In an implementation, given that the mobile terminal sends the captured videos to the cloud by mobile communication, to reduce delay of video transmission due to a limited transmission rate of a mobile communication link, thereby ensuring that the cloud processes the videos in real time. The mobile terminal compresses the captured videos by using a video compressing technology and transmits the compressed videos to the cloud.

In step 203, the cloud parses the captured videos to obtain a traffic scene at each of the vehicle locations in the traveling section.

The traffic scene at the vehicle location refers to a traffic state in a traveling section taking the vehicle as a center and taking a valid capturing distance of the camera arranged in the vehicle as a radius. In an implementation, reference is made to FIG. 7 which is a schematic flowchart of a traffic scene at each of the vehicle locations in the traveling section obtained by parsing the captured videos by the cloud. The process includes step 2031 to step 2032.

In step 2031, the cloud performs target extraction for the video captured at each vehicle.

The cloud extracts targets from each video frame of the videos by using a target extraction technology, for example, a currently used frame difference method, background subtraction method, and the like. The targets re classified, for example, classifying into a static target and a dynamic target, which is added to the video locations when capturing the videos to obtain the captured target at corresponding vehicle locations. For example, the static target includes: various forms of traffic signs such as a road, a building, a traffic light, a lane board, a road line, an overcrossing bridge, and a vertical rod. The dynamic target includes: a vehicle, pedestrian, and any target in a motion state.

In step 2032, mode identification is performed on the extracted target to obtain at least one of the following features: a road scene of the road, a behavior type of the pedestrian, a behavior type of the vehicle, and a status of the traffic sign.

For example, the road scene includes: 1) a section sign of the road, for example, xx section of Shennan avenue; 2) a status of the road, including a normal road, a wet road, a broken road, and a limited road, for example, xx section of Keyuan south road is in construction, crowded, or sank. 3) The behavior type of the pedestrian includes: traversing the road and waiting at a side of the road. 4) The behavior type of the vehicle includes: speed exceeding, lane changing, retrograding, and urgent braking.5) The status of the traffic sign, taking the traffic light as an example, includes a red light, a green light, and a yellow light.

In step 204, the videos captured for the traveling section at each vehicle in the traveling section from the at least one viewing angle are synthesized by the cloud, to obtain a panoramic video for the traveling section.

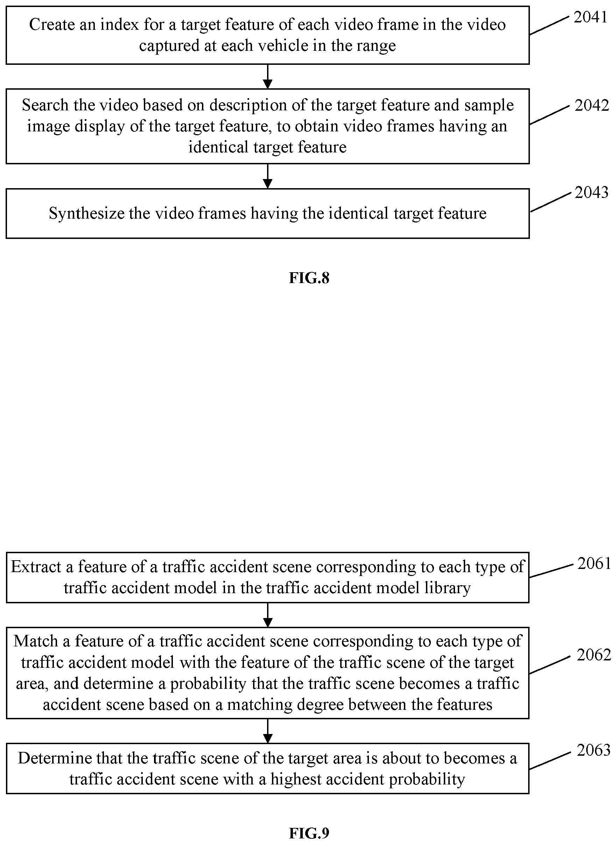

The panoramic video is obtained by stitching videos captured at a same time instant by vehicles in the traveling section, and indicates a video in which the traveling section can be watched from all viewing angles. In an implementation, reference is made to FIG. 8 which is a schematic flowchart of synthesizing a panoramic video. The process includes step 2041 to step 2043.

In step 2041, an index is created for a target feature of each video frame in the video captured at each vehicle in the traveling section.

The target feature is obtained by performing feature extraction on the target extracted from the video in the foregoing step 2031. For example, the feature may be a color feature, a profile feature, a texture feature, or a feature that can distinguish the target from any other target in the video frame. Different features are indicated by using description of the target feature or a sample image of the target. The descriptions of the target feature may be indicated by an identifier (for example, a number) or a feature vector (a component of the feature vector is used to represent a type of feature of the target).

In step 2042, the video is searched based on a description of a target feature or based on a sample image display of the target feature, to obtain video frames having an identical target feature.

For the videos captured at a same time instant by mobile terminals in the traveling section, indexed target features are searched in sequence in video frames of the video to determine the video frames having the identical target feature in the video. A same target in the traveling section is captured, so that there are the video frames having the identical target feature. A potential connection relationship between video frames can be determined by determining all video frames having the identical target feature.

For example, it is assumed that video 1 includes video frame 1, video frame 2, and video frame 3, and video 2 includes video frame 4, video frame 5, and video frame 6. If target feature 1 is extracted from the video frame 1, the target feature 1 is extracted from the video frame 2, the target feature 1 and target feature 2 are extracted from the video frame 3, the target feature 2 is extracted from the video frame 4, the target feature 2 and target feature 3 are extracted from the video frame 5, and the target feature 3 is extracted from the video frame 6, the video frame 1 and the video frame 2 have the same target feature 1, the video frame 2 and the video frame 3 have the same target feature 1, the video frame 3 and the video frame 4 have the same target feature 2, the video frame 4 and the video frame 5 have the same target feature 2, and the video frame 5 and the video frame 6 have the same target feature 3. Therefore, the video frame 1 to the video frame 6 are obtained by continuously capturing for an area in the traveling section. Areas corresponding to the video 1 to the video 6 in the traveling section are connected in sequence. A potential connection relationship between the video 1 and the video 6 is shown in table 1.

**Table 1**

| | video frame 1 | video frame 2 | video frame 3 | video frame 4 | video frame 5 | video frame 6 |
|---|---|---|---|---|---|---|
| video frame 1 | \ | target feature 1 | \ | \ | \ | \ |
| video frame 2 | \ | \ | target feature | \ | \ | \ |
| video frame 3 | \ | \ | \ | target feature | \ | \ |
| video frame 4 | \ | \ | \ | \ | target feature | \ |
| video frame 5 | \ | \ | \ | \ | \ | target feature |

It should be noted that the viewing angle in which capturing is performed by the camera may not be completely same in different mobile terminals. Therefore, a same target may be different in videos captured by different mobile terminals. Optionally, when searching indexed target features in sequence in video frames of the video, the target feature and geometric deformation (for example, rotating and stretching) of the target feature are matched with the target feature included in video frames of the video. If the matching succeeds, it is determined that the successfully matched video frames have the same target feature.

In step 2043, the video frames having the identical target feature obtained by searching are synthesized.

In an implementation, for the video frames having the identical target feature, the video frames are stitched according to the identical target feature until all video frames are stitched to form a panoramic video frame for the traveling section.

For example, the video frame 1 to the video frame 6 are described continuously in the following. The connection relationship between the video frame 1 to the video frame 6 based on the target feature is as follows: the video frame 1- (the target feature 1) > the video frame 2- (the target feature 1) > the video frame 3- (the target feature 2) > the video frame 4- (the target feature 2) > the video frame 5- (the target feature 3) > the video frame 6. The video frame 1 and the video frame 2 are stitched and synthesized based on the target feature 1. The video frame 2 and the video frame 3 are stitched and synthesized based on the target feature 1. The video frame 3 and the video frame 4 are stitched and synthesized based on the target feature 2. The video frame 4 and the video frame 5 are stitched and synthesized based on the target feature 2. The video frame 5 and the video frame 6 are stitched and synthesized based on the target feature 3, so as to form the panoramic video stitched and synthesized from the video frame 1 to the video frame 6.

In step 205: vehicles in a target area in the panoramic video are identified, and traffic scenes at vehicles in the target area are synthesized to obtain a traffic scene of the target area.

For a traveling section, there is a need to perform traffic accident early warning to the traffic scene of all areas (accordingly, the target area is a whole area of the traveling section) in the traveling section, or there is a need to perform traffic accident early warning to a particular area in the traveling section (accordingly, the particular area is the target area, such as a road with frequent accidents, a road with heavy traffic, or a crossroad). To perform early warning on the target area, there is a need to obtain an integrated traffic scene of the target area, which is already determined in the foregoing step 203 based on the traffic scene at each vehicle location in the traveling section. A video captured at a single vehicle is limited due to the capturing viewing angle. Therefore, the integrated traffic scene at the vehicle locations cannot be determined based on the video captured at the single vehicle. In this case, in an implementation, vehicles included in the target area are identified from the panoramic video. The traffic scenes at the vehicle locations in the target area are integrated to form the integrated traffic scene of the target area.

It is assumed that a target traveling section is a crossroad. The target traveling section includes vehicle 1, vehicle 2, and vehicle 3. A traffic scene corresponding to a video captured by the vehicle 1 to the vehicle 3 is shown in table 2.

**Table 2**

| | Road scene | Vehicle behavior | Pedestrian behavior |
|---|---|---|---|
| Vehicle 1 | **north road, north is unblocked | Vehicle 3 changes a lane. | No pedestrian |
| Vehicle 2 | **south road, the road surface is bumpy | No other vehicles | Two pedestrian are waiting |
| Vehicle 3 | **north road, north is unblocked | Vehicle 1 drives to the right | No pedestrian |

It can be seen from table 2 that it is one-sided to use the traffic scene corresponding to the video captured at any of the vehicle 1 to the vehicle 3 as a traffic scene of the target traveling section, which cannot accurately describe the traffic scene of the target area. A traffic scene obtained by integrating the traffic scenes corresponding to the videos captured at the vehicle 1 to the vehicle 3 is used as the traffic scene of the target area, which can fully describe a traffic condition of the target area.

In step 206, the cloud performs traffic accident prediction to determine whether the traffic scene of the target area is about to become a traffic accident scene.

In an implementation, reference is made to FIG. 9 which shows an optional schematic flowchart of determining whether the traffic scene of the target area is about to become a traffic accident scene. The process includes step 2061 to step 2063.

In step 2061, a feature of a traffic accident scene corresponding to each type of traffic accident in a traffic accident model library is extracted. The traffic accident model library includes a correspondence between traffic accident scenes and traffic accident types.

In an embodiment, the traffic accident model library maintained by a cloud includes traffic accident models for different types of traffic accidents. The traffic accident model includes a correspondence between traffic accident scenes and traffic accident types. The traffic accident scenes of different traffic accidents each include three features: a road scene, a pedestrian behavior, and a vehicle behavior. Certainly, the traffic accident scenes may further include other types of features. For example, an optional example of the traffic accident model library is shown in table 3.

**Table 3**

| | Road scene | Vehicle behavior | Pedestrian behavior |
|---|---|---|---|
| Over speed accident | **south road, unblocked | Overtake by a vehicle | No pedestrian/No pedestrian goes through a red light |
| Serial rear-ended accidents | **north road, unblocked | A vehicle is speeding/A safe distance between vehicles is less than 10 meters | No pedestrian/No pedestrian goes through a red light |
| Crossroad accident | **south road, unblocked | Vehicle across a road | Red light state, pedestrian crosses the road |

The traffic accident model library shown in table 3 is merely an example. In table 3, there is a one-to-one correspondence between the traffic accident models and traffic accident scenes. Optionally, a same type of traffic accidents may correspond to multiple traffic accident scenes.

In step 2062, a feature of a traffic accident scene corresponding to each type of traffic accident model is matched with the feature of the traffic scene of the target area, and based on a matching degree between the features, a probability that the traffic scene becomes a traffic accident scene is determined.

In an implementation, the matching degree between the feature of the traffic accident scene corresponding to each type of traffic accident model and the feature of the traffic scene of the target area determines the probability that the traffic scene becomes a traffic accident scene. Therefore, there is a positive correlation between the matching degree and the accident probability. For example, the positive correlation may be a proportional relationship, or may be described by any curve having the foregoing single trend.

In step 2063, it is determined that the traffic scene of the target area is about to become a traffic accident scene with a highest accident probability.

In an implementation, if the highest accident probability is lower than a threshold of the accident probability, it is indicated that at a current time instant, the probability that the traffic scene of the target area becomes a traffic accident scene is low. Therefore, it is determined that the traffic scene of the target area is about to become a traffic accident scene with the highest accident probability higher than the threshold of the accident probability, so as to ensure accuracy of the traffic accident early warning. The threshold of the accident probability may be adjusted according to an accuracy rate of early warning fed back by a vehicle driver later. If the vehicle driver feeds back that the accuracy rate of early warning is low, it is indicated that the threshold of the accident probability is relatively small, affecting the accuracy of early warning. Therefore, the threshold of the accident probability is increased (according to a set extent) until the driver feeds back that the accuracy rate of early warning meets a practical standard.

In step 207, the cloud sends early warning information to the vehicles in the target area when the cloud determines that the traffic scene is about to become a traffic accident scene.

In an implementation, when it is determined that the traffic scene of the target area is about to become a traffic accident scene, traffic accident early warning corresponding to a type of the traffic accident scene is sent to a vehicle involved in the traffic accident scene in the target area, so as to prompt the driver to take care and avoid the traffic accident.

In another implementation, when it is determined that the traffic scene of the target area is about to become a traffic accident scene, a reason why the traffic accident happens to the vehicle involved is analyzed according to the type of the traffic accident scene, for example, exceeding a speed limit and merging. Driving prompt information is sent to the vehicle involved to instruct the vehicle to drive based on the prompt information, for example, no speed exceeding, no merging to prevent the traffic accident, thereby avoiding the traffic accident.

To sum up, in the embodiments of this application, the traffic scene is determined based on the videos captured at the vehicle locations in the traveling section. The videos captured at the vehicles in the traveling section are synthesized to obtain the panoramic video for the traveling section, so that the vehicles in the target area are determined according to the panoramic video. The traffic scenes at the vehicle locations in the target area are integrated to obtain the integrated traffic scene of the target traveling section, so as to perform traffic accident prediction for the integrated traffic scene of the target traveling section by using a traffic accident model, and perform early warning on the vehicles before the traffic accident happens, thereby avoiding the traffic accident. The traffic accident prediction is performed for an actual traffic scene of the vehicles in the traveling section, and the prediction is targeted and accurate, thereby significantly reducing the risk of the traffic accident.

If vehicle traffic is small in the traveling section, synthesis of the panoramic video for the traveling section completely depends on the videos captured at the vehicles in the traveling section. In this case, all areas of the traveling section cannot be covered because of a single capturing viewing angle and a few captured videos, resulting in that the panoramic video of all areas of the traveling section cannot be synthesized.

For the foregoing condition, in an embodiment, the traffic scene feature library is further provided. Videos in the traffic scene feature library are used as supplementary for synthesizing the panoramic video from the videos captured by the mobile terminal. For example, the traffic scene feature library may include at least one of the following traffic scenes.

### 1) A static traffic scene for the traveling section extracted from the videos captured at the vehicles

For a traveling section, a static target is extracted from the videos captured at each vehicle in the traveling section, that is, a static target in the traveling section, for example, traffic signs such as a road, a flyover, a traffic light, a road lane, a road sign, and a vertical rod. A static traffic scene for the traveling section is synthesized based on the static target. The static traffic scene for the traveling section is added to update the traffic scene feature library. As time elapses, the static traffic scene for the traveling section can be improved until all areas of the traveling section are covered.

### 2) A traffic scene extracted from a surveillance video captured by a third party for the traveling section

The surveillance video is captured by the third party, such as a surveillance video database of a traffic management department, for a particular monitoring area in the traveling section, such as a crossroad and a flyover. Static targets are extracted from the surveillance video and the static targets are synthesized to obtain the static traffic scene for the traveling section. The synthesized static traffic scene is added to update the traffic scene feature library.

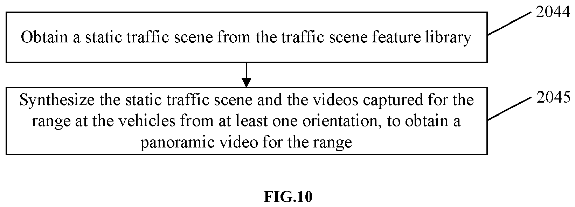

Reference is made to FIG. 10, which is an optional schematic flowchart of obtaining a panoramic video for a traveling section by a cloud in step 204 shown in FIG. 6. The process includes step 2044 to step 2045.

In step 2044, a static traffic scene is obtained from a traffic scene feature library.

In an embodiment, in a case that vehicle traffic in the traveling section is lower than a threshold of the vehicle traffic, that is, it is determined that videos captured at vehicles in the traveling section at a current time instant cannot synthesize a panoramic video for the traveling section, the static traffic scene is obtained from the traffic scene feature library.

In step 2045, the static traffic scene for the traveling section obtained from the traffic scene feature library and the video captured for the traveling section at each vehicle in the traveling section from the at least one viewing angle are synthesized, to obtain the panoramic video for the traveling section.

In an embodiment, an index is created for a target feature of each video frame in the video captured at each vehicle in the traveling section and a target feature of each video frame in the video obtained from the traffic scene feature library. The video (including a video captured by a camera at a location of a mobile terminal in a traveling section, and at least one type of video obtained from the traffic scene feature library) is searched based on a description of a target feature or based on sample image display of the target feature, to obtain video frames having an identical target feature. The video frames having the identical target feature are synthesized.

The video captured by the mobile terminal in the traveling section is mainly used to construct a dynamic traffic scene in the panoramic video. The static traffic scene obtained from the traffic scene feature library is mainly used to synthesize static scenery in the panoramic video, such as buildings. The captured video and the static traffic scene complement each other to fully synthesize the panoramic video for the traveling section, so as to accurately determine an integrated traffic scene of the target area, thereby ensuring accuracy of performing traffic accident prediction on the traffic scene of the target area based on the traffic accident model.

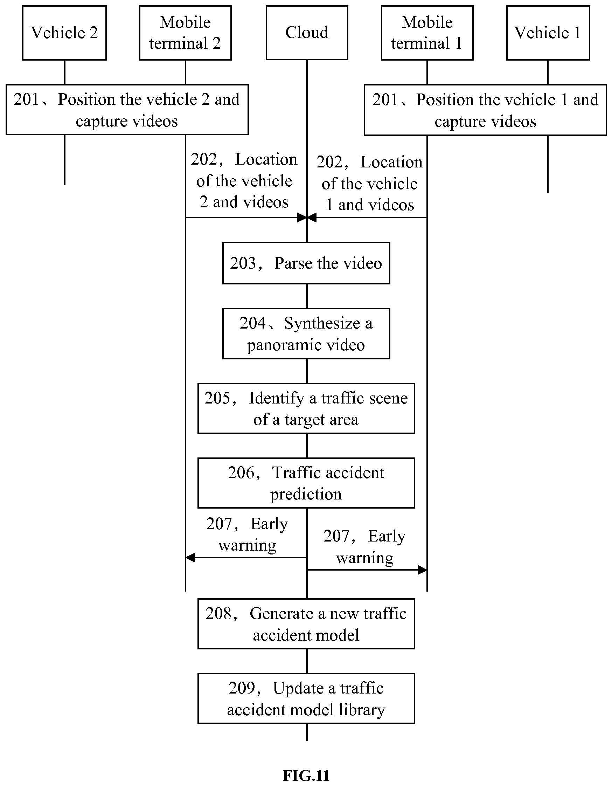

In an embodiment, in order to adaptively update the traffic accident model in the traffic accident model library in a process of traffic accident prediction, so as to perform full and accurate determination on various traffic accident scenes, reference is made to FIG. 11, which shows an optional schematic flowchart of a traffic accident early warning method. Based on FIG. 6, the method further includes the following steps 208 to 209.

In step 208, a cloud generates a new traffic accident model based on the traffic scene of the target area, and a traffic accident type corresponding to a traffic accident scene with the highest accident probability.

In step 209, the cloud updates the traffic accident model library by using the new traffic accident model.

For a newly predicted traffic accident scene each time, the new traffic accident scene and a corresponding traffic accident type form the new traffic accident model, and the traffic accident model feature library is updated by adding the new traffic accident model. The traffic accident model in the traffic accident model library adaptively learns following continuously updating of traffic accident scenes in the traveling section, without manually updating the traffic accident model library. With continuous prediction on traffic accidents in the traveling section, accuracy to perform traffic accident prediction based on the traffic accident model library is increasingly high, thereby ensuring accuracy of prediction of the traffic accident model.

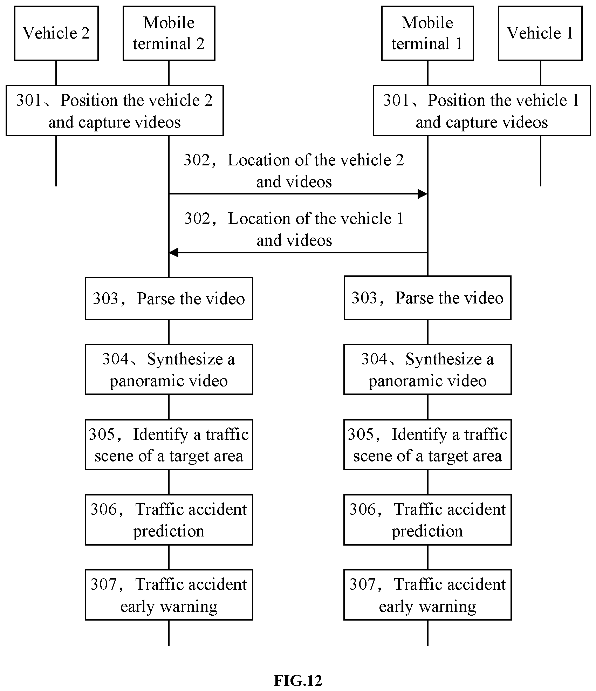

In a case that a traffic accident early warning device is a mobile terminal, traffic accident early warning in a traveling section is described in conjunction with FIG. 12 hereinafter. Traffic accident early warning in multiple traveling sections may be implemented with reference to the following technical solutions. Different from the foregoing embodiment, traffic accident early warning processing shown in FIG. 12 is merely completed by the mobile terminal without a cloud.

FIG. 12 is a schematic flowchart of a traffic accident early warning method according to an embodiment of this application. The method includes step 301 to step 307 in the following.

In step 301, each mobile terminal in a vehicle in a traveling section positions the vehicle where the mobile terminal is located and captures videos at the vehicle location in the traveling section from at least one viewing angle.

As described above, the vehicle locations may be indicated by original geographic coordinates or geographic square coordinates. Alternatively, in an implementation, information of different traveling sections may be preset in the mobile terminal. A positioning service is opened among mobile terminals, so that any mobile terminal can obtain real-time locations of other mobile terminals in the traveling section.

In step 302, each mobile terminal in the traveling section sends the vehicle location and the captured videos to other mobile terminals.

Because the captured videos are required to be sent to other mobile terminals in the traveling section subsequently and given that different mobile terminals have different data processing abilities, the mobile terminal may send the captured videos after compressing the captured video, so as to ensure that all mobile terminals can have enough space to receive and process the videos.

In step 303, the mobile terminal in the traveling section parses the captured videos to obtain a traffic scene at the vehicle location in the traveling section.
Example 1): In an implementation, each vehicle in the traveling section parses the captured videos and the videos sent by other mobile terminals in the traveling section, to obtain traffic scenes at locations of mobile terminals in the traveling section. The mobile terminals parse the videos to obtain the traffic scene at the locations in the traveling section, which may be implemented with reference to that the cloud parses the captured videos to obtain a traffic scene at each of the vehicle locations in the traveling section.
Example 2): In another implementation, the vehicles in the traveling section determine at least one mobile terminal with a highest processing ability in the traveling section as a node of the traveling section by negotiating. The node parses all the videos captured at all the vehicles in the traveling section to obtain the traffic scene at the vehicle locations in the traveling section.

In step 304, each mobile terminal in the traveling section synthesizes the videos captured for the traveling section at vehicles in the traveling section from the at least one viewing angle, to obtain a panoramic video for the traveling section.

It is described by using the example 1 again. Each mobile terminal in the traveling section performs panoramic synthesis based on the captured video and the received video. Panoramic video synthesis may be implemented with reference to the description of synthesizing the panoramic video by the cloud.

It is described by using the example 2 again. The mobile terminals as the nodes in the traveling section synthesize the panoramic video based on the captured video and the received video.

In step 305, the mobile terminals in the traveling section identify vehicles in a target area in the panoramic video, and synthesize traffic scenes at vehicles in the target area to obtain a traffic scene of the target area.

It is further described by using the example 1. In an implementation, each mobile terminal in the traveling section identifies vehicles in a target area in the panoramic video, and synthesizes traffic scenes at vehicles in the target area to obtain a traffic scene of the target area. Similarly, identification of the traffic scene of the target area may be implemented with reference to the description of identifying the target area by the cloud.

It is further described by using the example 2. In another implementation, the mobile terminals as the nodes in the traveling section identify vehicles in the target area in the panoramic video, and synthesize traffic scenes at vehicles in the target area to obtain a traffic scene of the target area.

In step 306, the mobile terminals in the traveling section determine whether the traffic scene of the target area is about to become a traffic accident scene.

It is further described by using the example 1. In an implementation, each mobile terminal in the traveling section determines whether the traffic scene of the target area is about to become a traffic accident scene. Similarly, determination of whether the traffic scene of the target area is about to become a traffic accident scene may be implemented with reference to the description of determining whether the traffic scene of the target area is about to become a traffic accident scene by the cloud.

It is further described by using the example 2. In another implementation, the mobile terminals as the nodes in the traveling section determine whether the traffic scene of the target area is about to become a traffic accident scene.

In step 307, early warning information is sent to the vehicles in the target area when the mobile terminals in the traveling section determine that the traffic scene is about to become a traffic accident scene.

For example, for any mobile terminal, when determining that a traffic scene of an area where the mobile terminal is located is about to become a traffic accident scene, the mobile terminal sends early warning and transmits the early warning to mobile terminals in other vehicles involved in the traffic accident.

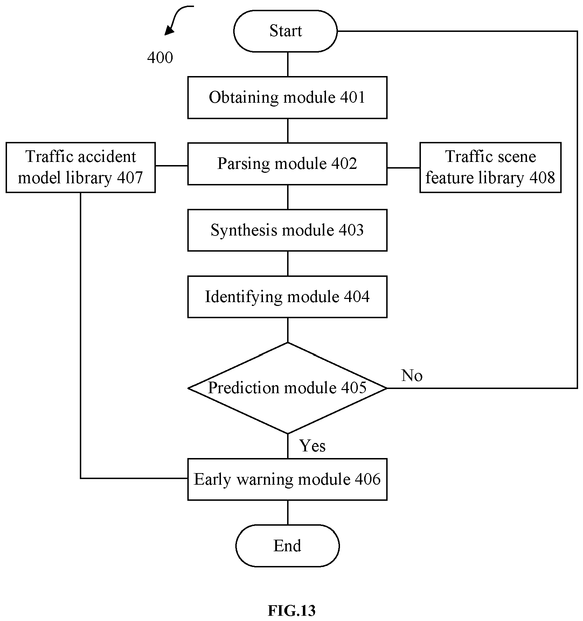

A structure of the traffic accident early warning device is further described hereinafter. Reference is made to FIG. 13 which is a schematic structural diagram of a traffic accident early warning device 400 according to an embodiment of this application. The device includes: an obtaining module 401, a parsing module 402, a synthesis module 403, an identification module 404, a prediction module 405, and an early warning module 406. The traffic accident early warning device 400 may further include a traffic accident model library 407 and a traffic scene feature library 408. The modules are described in the following.

The obtaining module 401 is configured to obtain locations of multiple vehicles in a traveling section and videos captured for the traveling section at each of the vehicle locations from at least one viewing angle.

In an implementation, in a case that the traffic accident early warning device 400 is implemented as a mobile terminal, the obtaining module 401 includes a positioning unit and a capturing unit. The positioning unit may be implemented by a positioning module 103 shown in FIG. 3. The positioning module 103 receives a GPS signal or a Beidou positioning signal to position the vehicle. The vehicle locations may be indicated by the original geographic coordinates or geographical square coordinates. The capturing unit is configured to capture videos for the traveling section at each of the vehicle locations from the at least one viewing angle. In actual applications, the capturing unit may be implemented by a camera 106 shown in FIG. 3. The capturing unit may be implemented as a camera, or implemented as a module constituted by multiple cameras 106 to perform all-directional video capturing. In addition, the capturing unit, may be further integrated with a cloud device to adjust a capturing viewing angle of the cameras 106. For example, the capturing unit is arranged at a top of the vehicle, so as to enlarge the capturing visual angle to the largest degree.

The parsing module 402 is configured to parse the captured videos to obtain a traffic scene at each of the vehicle locations in the traveling section.

In some embodiments of the traffic scene obtained by parsing the videos, the parsing module 402 performs target extraction for the video captured at each vehicle to obtain at least one of the following targets: a road, a vehicle, a pedestrian, and a traffic light; and performs mode identification on the extracted target to obtain at least one of the following features: a road scene of the road, a behavior type of the pedestrian, a behavior type of the vehicle, and a status of the traffic light.

The synthesizing module 403 synthesizes the videos captured for the traveling section at vehicles in the traveling section from the at least one viewing angle, to obtain a panoramic video for the traveling section.

The identification module 404 is configured to identify vehicles in a target area in the panoramic video, and synthesize traffic scenes at vehicles in the target area to obtain a traffic scene of the target area.

In some embodiments of synthesizing based on the traffic scenes at the vehicles in the target area, the synthesis module 403 creates an index for a target feature of each video frame in the video captured at each vehicle in the traveling section, searches the video based on a description of a target feature or based on sample image display of the target feature, to obtain video frames having an identical target feature, and synthesizes the video frames having the identical target feature.

The prediction module 405 determines whether the traffic scene of the target area is about to become a traffic accident scene.

In some embodiments of determining whether the traffic scene of the target area is about to become a traffic accident scene, the prediction module 405 extracts a feature of a traffic accident scene corresponding to each type of traffic accident model in a traffic accident model library 407. The traffic accident model library includes: a correspondence between traffic accident scenes and traffic accident types. The prediction module 405 matches a feature of a traffic accident scene corresponding to each type of traffic accident with the feature of the traffic scene of the target area; determines, based on a matching degree between the features, a probability that the traffic scene of the target area becomes a traffic accident scene; and determines that the traffic scene of the target area is about to become a traffic accident scene with a highest accident probability.

The early warning module 406 sends early warning information to the vehicles in the target area when the prediction module 405 determines that the traffic scene is about to become a traffic accident scene.

For example, the early warning module 406 executes at least one of the following operations: sending traffic accident early warning corresponding to the traffic accident scene to a vehicle involved in the traffic accident scene in the target area; and sending driving prompt information to the vehicle involved in the traffic accident scene in the target area, to instruct the vehicle to drive based on the prompt information, to avoid the traffic accident.

It should be noted that the parsing module 402, the synthesis module 403, the identification module 404, the prediction module 405, and the early warning module 406 are different components of the traffic accident early warning device based on a logical function. Any multiple modules may be combined, or any module may be divided into multiple modules. The parsing module 402, the synthesis module 403, the identification module 404, the prediction module 405, and the early warning module 406 each can be implemented by executing executable instructions stored in the memory 105 by the processor 101 shown in FIG. 3.

In an embodiment, in order to ensure that the synthesized panoramic video can cover all areas of the traveling section, the parsing module 402 extracts a static target from the video captured at each of the vehicles, synthesizes a static traffic scene for the traveling section from the static target, and adds the static traffic scene to update the traffic scene feature library 406. Alternatively, the parsing module 402 obtains a surveillance video captured by a third party for a particular monitoring area in the traveling section, from a third-party surveillance video database, and adds the surveillance video to update the traffic scene feature library 406. Accordingly, the synthesis module is further configured to obtain at least one of the following from the traffic scene feature library: a surveillance video captured by a third party for a particular monitoring area in the traveling section; a video corresponding to the static traffic scene of the traveling section. The synthesis module synthesizes at least one type of video obtained from the traffic scene feature library and a video captured for the traveling section at each vehicle in the traveling section from the at least one viewing angle, to obtain a panoramic video for the traveling section. The video of the static scene in the traffic scene feature library is used to compensate a static scene in the video captured at the vehicles, thereby ensuring that the synthesized panoramic video includes an integrated traffic scene.

In an embodiment, in order to adaptively update the traffic accident model in the traffic accident model library in a process of traffic accident prediction, so as to perform full and accurate determination on various traffic accident scenes, the early warning module 406 is further configured to generate a new traffic accident model based on the traffic scene of the target area and a traffic accident type corresponding to a traffic accident scene with a highest accident probability; and update the traffic accident model library 407 by using the new traffic accident model.

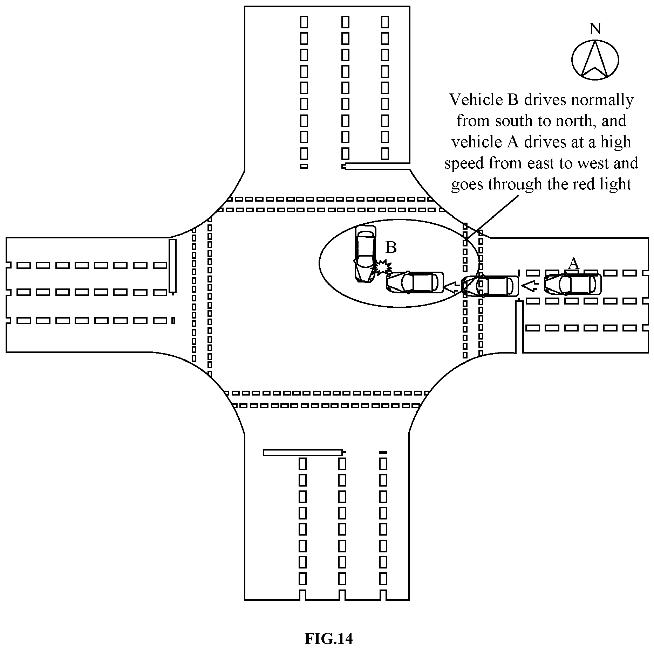

Reference is made to FIG. 14, which shows an optional schematic diagram of a target area in a traveling section. In FIG. 14, the target area is a crossroad, for example. In the target area, vehicle B drives from north to south at north of the crossroad and vehicle A drives from east to west at a high speed at east of the crossroad. Because of the limited visual angle, drivers of vehicle A and vehicle B cannot perceive each other. Once vehicle A goes through a red light, vehicle A will collide with vehicle B.

Based on the solution provided in the embodiments of this application, mobile terminals arranged in vehicle A and vehicle B capture videos at the vehicle locations and position the vehicles. The cloud synthesizes a panoramic video of the crossroad based on videos and locations uploaded by the mobile terminals arranged in vehicle A and vehicle B. When the panoramic video is to be synthesized, a video of the cross road can be synthesized in conjunction with the traffic scene feature library, so as to synthesize an integrated panoramic video of the traffic scene at the crossroad at a current time instant.

The traffic scene at the crossroad parsed from the panoramic video by the cloud is shown in Table 4:

**Table 4**

| | Road scene | Vehicle behavior | Pedestrian behavior |
|---|---|---|---|
| Vehicle B | **north road, north is unblocked | Cross a crossroad | No pedestrian |
| Vehicle A | **east road, east and west are unblocked | Drive through a red light | No pedestrian |

The traffic accident model in the traffic accident model library is used to perform traffic accident prediction based on the panoramic video, and a traffic accident model that two vehicles collide at the crossroad is matched as shown in table 5.

**Table 5**

| | Road scene | Vehicle behavior | Pedestrian behavior |
|---|---|---|---|
| Collide accident at a crossroad | Unblocked | A vehicle goes through a red light in a first direction /a vehicle is crossing a crossroad in a second direction | No pedestrian/no pedestrian goes through a red light |

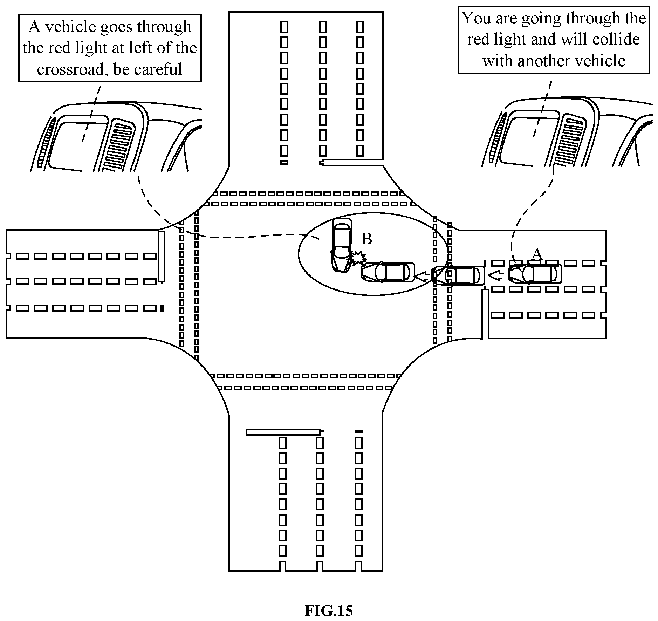

It is predicted that vehicle A will collide with vehicle B because vehicle A goes through the red light, hence early warning is sent in real time to vehicle A and vehicle B to avoid an accident. For example, the mobile terminal may display prompt information on a display screen and send buzzing alarm prompt as shown in FIG. 15. The prompt information includes: a driver of vehicle A is going through the red light and will collide with vehicle B, and a driver of vehicle B should take care vehicle A going through the red light in another direction to avoid an accident.

A computer storage medium is further provided according to an embodiment of this application, which stores executable instructions. The executable instructions are used to execute the traffic accident early warning method.

To sum up, in the embodiments of this application, the panoramic video for the traveling section is synthesized by capturing real-time videos at the vehicle locations in the traveling section, and a real-time traffic scene of the target area is accurately determined based on the panoramic video, so as to perform traffic accident prediction for the traffic scene of the target traveling section by using a traffic accident model. In this way, early warning is sent to related vehicles before the traffic accident happens, thereby avoiding the traffic accident. The traffic accident prediction is performed for an actual traffic scene (that is, a driving condition) of the vehicles in the traveling section, and the prediction is targeted and accurate, thereby significantly reducing the risk of the traffic accident.

In the embodiments of this application, if implemented in the form of software functional modules and sold or used as independent products, the integrated modules may be stored in a computer-readable storage medium. Based on such an understanding, persons skilled in the art should understand that the embodiments of this application may be implemented as methods, systems, or computer program products. Therefore, this application may be implemented by the form of total hardware embodiments, total software embodiments, or embodiments combining software and hardware. In addition, this application may be implemented by a computer program product implemented on one or more computer available storage media including computer available program code. The storage media include, but are not limited to a U disk, a mobile hard disk, a read-only memory (ROM), a random access memory (RAM), a disk memory, a compact disc read-only memory (CD-ROM), an optical memory, and the like.

This application is described with reference to flowcharts and/or block diagrams of the method, the device (the system), and the computer program product according to the embodiments of this application. It should be understood that computer program instructions may be used for implementing each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or the processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although embodiments of this application have been described, once persons skilled in the art know a basic creative concept, they can make other changes and modifications to these embodiments. Therefore, the following claims are intended to cover the embodiments and all changes and modifications fall within the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be based on the protection scope of the claims.

## Claims

1. A traffic accident early warning method, comprising:
obtaining locations of a plurality of vehicles in a traveling section and obtaining videos captured for the traveling section at each of the vehicle locations from at least one view angle;
parsing the videos to obtain a traffic scene at each of the vehicle locations;
synthesizing the videos captured for the traveling section at each of the vehicle locations from the at least one viewing angle, to obtain a panoramic video for the traveling section;
identifying vehicles in a target area in the panoramic video, and synthesizing traffic scenes at vehicle locations of the vehicles in the target area to obtain a traffic scene of the target area;
performing traffic accident prediction for the target area based on the traffic scene of the target area; and
sending early warning information to at least one of the vehicles in the target area in accordance with a determination that the traffic scene of the target area is about to have an accident in the target area.

2. The method according to claim 1, wherein the parsing the captured videos to obtain a traffic scene at each of the vehicle locations in the traveling section comprises:
performing target extraction for the video captured at each of the vehicle locations to obtain at least one of the following targets: a road, a vehicle, a pedestrian, and a traffic sign; and
performing mode identification on the extracted target to obtain at least one of the following features: a road scene of the road, a behavior type of the pedestrian, a behavior type of the vehicle, and a status of the traffic sign.

3. The method according to claim 1, wherein the synthesizing the videos captured for the traveling section at the vehicle locations from the at least one viewing angle, to obtain a panoramic video for the traveling section comprises:
obtaining a static traffic scene of the traveling section from a traffic scene feature library; and
synthesizing the obtained static traffic scene of the traveling section and the videos captured for the traveling section at each of the vehicle locations from the at least one viewing angle, to obtain the panoramic video of the traveling section.

4. The method according to claim 3, further comprising:
extracting a static target from the video captured at each of the vehicle locations, synthesizing a static traffic scene for the traveling section from the static target, and adding the static traffic scene to update the traffic scene feature library;
and/or
obtaining a surveillance video from a third-party surveillance video database, synthesizing a static traffic scene for the traveling section from a static target extracted from the surveillance video, and adding the synthesized static traffic scene to update the traffic scene feature library, wherein the surveillance video is captured by a third party for a particular monitoring area in the traveling section.

5. The method according to claim 1, wherein the synthesizing the videos captured for the traveling section at the vehicle locations from the at least one viewing angle, to obtain a panoramic video for the traveling section comprises:
creating an index for a target feature of each video frame in the videos captured at each of the vehicle locations;
searching the videos based on a description of the target feature or based on sample image display of the target feature, to obtain video frames having an identical target feature; and
synthesizing the video frames having the identical target feature.

6. The method according to claim 1, wherein the performing traffic accident prediction for the target area based on the traffic scene of the target area comprises:
matching a target feature of a traffic accident scene corresponding to each type of traffic accident in a traffic accident model library with the feature of the traffic scene of the target area, and determining, based on a matching degree between the features, a probability that the traffic scene of the target area becomes a traffic accident scene, wherein the traffic accident model library comprises a correspondence between traffic accident scenes and traffic accident types; and
determining that the traffic scene of the target area is about to become a traffic accident scene with a highest accident probability.

7. The method according to claim 6, further comprising:
generating a new traffic accident model based on the traffic scene of the target area and a traffic accident type corresponding to the traffic scene of the target area; and
updating the traffic accident model library by using the new traffic accident model.

8. The method according to claim 1, wherein
the sending early warning information to at least one of the vehicles in the target area when it is determined that the traffic scene of the target area is about to become a traffic accident scene comprises executing at least one of the following operations:
sending traffic accident early warning corresponding to the traffic accident scene to a vehicle involved in a traffic accident scene in the target area; and
sending driving prompt information to the vehicle involved in the traffic accident scene in the target area, to instruct the vehicle to drive based on the prompt information, to avoid a traffic accident.

9. A traffic accident early warning device, comprising:
an obtaining module, configured to obtain locations of a plurality of vehicles in a traveling section and videos captured for the traveling section at each of the vehicle locations from at least one viewing angle;
a parsing module, configured to parse the captured videos to obtain a traffic scene at each of the vehicle locations;
a synthesis module, configured to synthesize the videos captured for the traveling section at the vehicle locations from the at least one viewing angle, to obtain a panoramic video for the traveling section;
an identification module, configured to identify vehicles in a target area in the panoramic video, and synthesize traffic scenes at vehicle locations of the vehicles in the target area to obtain a traffic scene of the target area;
a prediction module, configured to perform traffic accident prediction for the target area based on the traffic scene of the target area; and
an early warning module, configured to send early warning information to at least one of the vehicles in the target area when it is determined that the traffic scene of the target area is about to become a traffic accident scene.

10. The traffic accident early warning device according to claim 9, wherein
the parsing module is further configured to perform target extraction for the video captured at each of the vehicle locations to obtain at least one of the following targets: a road, a vehicle, a pedestrian, and a traffic sign; and
the parsing module is further configured to perform mode identification on the extracted target to obtain at least one of the following features: a road scene of the road, a behavior type of the pedestrian, a behavior type of the vehicle, and a status of the traffic sign.

11. The traffic accident early warning device according to claim 9, wherein
the synthesis module is further configured to:
obtain a static traffic scene for the traveling section from a traffic scene feature library, and
synthesize the obtained static traffic scene for the traveling section and the videos captured for the traveling section at the vehicle locations from the at least one viewing angle, to obtain the panoramic video for the traveling section.

12. The traffic accident early warning device according to claim 11, wherein
the parsing module is further configured to:
extract a static target from the video captured at each of the vehicle locations, synthesize a static traffic scene for the traveling section from the static target, and add the static traffic scene to update the traffic scene feature library; or
obtain a surveillance video from a third-party surveillance video database, synthesize a static traffic scene for the traveling section based on the static target extracted from the surveillance video, and add the synthesized static traffic scene to update the traffic scene feature library, wherein the surveillance video is captured by a third party for a particular monitoring area in the traveling section.

13. The traffic accident early warning device according to claim 9, wherein
the synthesis module is further configured to:
create an index for a target feature of each video frame in the video captured at each of the vehicle locations;
search the video based on a description of the target feature or based on sample image display of the target feature, to obtain video frames having an identical target feature; and
synthesize the video frames having the identical target feature.

14. The traffic accident early warning device according to claim 9, wherein
the prediction module is further configured to:
extract a feature of the traffic scene of the target area;
match a feature of a traffic accident scene corresponding to each type of traffic accident in a traffic accident model library with the feature of the traffic scene of the target area, and determine, based on a matching degree between the features, a probability that the traffic scene of the target area becomes a traffic accident scene, wherein the traffic accident model library comprises a correspondence between traffic accident scenes and traffic accident types; and
determine that the traffic scene of the target area is about to become a traffic accident scene with a highest accident probability.

15. The traffic accident early warning device according to claim 14, wherein
the prediction module is further configured to generate a new traffic accident model based on the traffic scene of the target area and a traffic accident type corresponding to the traffic scene of the target area; and update the traffic accident model library by using the new traffic accident model.

16. The traffic accident early warning device according to claim 9, wherein
the early warning module is further configured to execute at least one of the following operations:
sending traffic accident early warning corresponding to the traffic accident scene to a vehicle involved in the traffic accident scene in the target area; and
sending driving prompt information to the vehicle involved in the traffic accident scene in the target area, to instruct the vehicle to drive based on the prompt information, to avoid a traffic accident.

17. A traffic accident early warning device, comprising a processor and a memory, wherein the processor is configured to execute a program stored in the memory to:
obtain locations of a plurality of vehicles in a traveling section and a video captured for the traveling section at each of the vehicle locations from at least one viewing angle;
parse the captured videos to obtain a traffic scene at each of the vehicle locations;
synthesize the videos captured for the traveling section at the vehicle locations from the at least one viewing angle, to obtain a panoramic video for the traveling section;
identify vehicles in a target area in the panoramic video, and synthesize traffic scenes at vehicle locations of the vehicles in the target area to obtain a traffic scene of the target area;
perform traffic accident prediction for the target area based on the traffic scene of the target area; and
sending early warning information to at least one of the vehicles in the target area when it is determined that the traffic scene of the target area is about to become a traffic accident scene.
